# EUROPEAN PATENT APPLICATION

(11) **EP 1 936 970 A2**
(43) Date of publication of application: **25.06.2008**
(21) Application number: 07024195.5
(22) Date of filing: 13.12.2007
(51) Int. Cl.: H04N 5/76

(54) **Method and apparatus for providing commercials suitable for viewing when fast-forwarding through a digitally recorder program**

(30) Priority: 21.12.2006 US 614344
(71) Applicant: GENERAL INSTRUMENT CORPORATION, Horsham, Pennsylvania 19044 (US)
(72) Inventor: Leary, Patrick, J., Horsham, Pennsylvania 19044 (US)
(74) Representative: Openshaw, Paul Malcolm

(57) **Abstract**

A method and apparatus is provided for rendering a video program. The apparatus includes a computer-readable storage medium and a processor responsive to the computer-readable storage medium and to a software program. The software program, when loaded into the processor, is operative to: receive a user command specifying a fast forward operation through a program; identify a first commercial associated with a commercial break in the program while fast forwarding therethrough; and select a substitute commercial that appears to be rendered at the normal presentation rate while fast forwarding through the program; and play the substitute commercial.

## Description

### Field of the Invention

The present invention relates generally to recording devices such a digital video recorder and more specifically to a method and apparatus in which the commercials in recorded programs are replaced with different commercials whenever the viewer fast-forwards through the original commercials.

### Background of the Invention

The introduction of Digital Video Recorders (DVR) have revolutionized the television recording industry. DVRs store program material onto a storage medium that is easily accessible, reusable, and the recording does not degrade over time as with video tapes. DVRs may be implemented as stand alone devices that are interconnected to other devices. Alternatively, they may be implemented as a subsystem of a set top terminal media center or television. In this case the DVR can control the channel tuned on the television, provide an interactive electronic program guide, and record programming on a manual or timer controlled basis. Additionally, the DVR can buffer incoming audiovisual programming to enable a viewer to pause or replay a portion of a live television program, so long as the pause or replay does not exceed the capacity of the buffer. In addition to the standard play mode (forward direction, standard speed), DVRs are capable of displaying video in several "trick play" modes. Trick play modes include fast forward play, slow forward play, fast reverse play, slow reverse play, and pause.

DVRs give the viewer an unprecedented amount of control over how the viewer watches live and recorded television programs. One of the effects of DVRs is that as viewers watch television programs stored on the DVR's storage medium, they have a tendency to skip over the commercial breaks. Since broadcasters generate their revenue through the value of the commercials they are concerned that the advent of the DVR may cause them to lose a significant part of their revenue.

### Brief Description of the Drawings

FIG. 1 depicts the main components of a DVR system.

PIG. 2 is a system diagram showing the flow of programming content and other information between a content provider, a DVR commerical content provider, a commercial provider and the DVR system.

FIG. 3 shows on example of the commercials index depicted in FIG. 2.

FIG. 4 is a flowchart illustrating one process by which the DVR system renders a program using substitute commercials described.

### Detailed Description

As detailed below, a DVR system is provided in which the commercials in recorded programs are replaced with different commercials whenever the viewer fast-forwards through the original commercials. As used herein commercials refer to any content that interrupts the primary content that is of interest to the viewer. Accordingly, commercials include but are not limited to content supplied by a sponsor, the broadcast service provider, or any other party, which is intended to inform the viewer about a product or service. For instance, public service announcements, station identifiers and the like are also referred to as commercials.

It should be understood by those skilled in the art that, although the system is described as being implemented in connection with a DVR subsystem of a set-top terminal, the invention also may be implemented for use in a stand alone DVR device that is network enabled. In addition, those skilled in the art will realize that the invention may be implemented in connection with other types of video rendering devices including personal video recorders, video cassette recorders, DVD players and the like. In some cases the video rendering device may be located at the headend of a broadband network so that it can supply programming to multiple viewers over the broadband network. The video rendering device also may be implemented as a stand-alone portable device or it may be incorporated in other devices, both portable and non-portable, such as a television, personal computer, PDA, and the like.

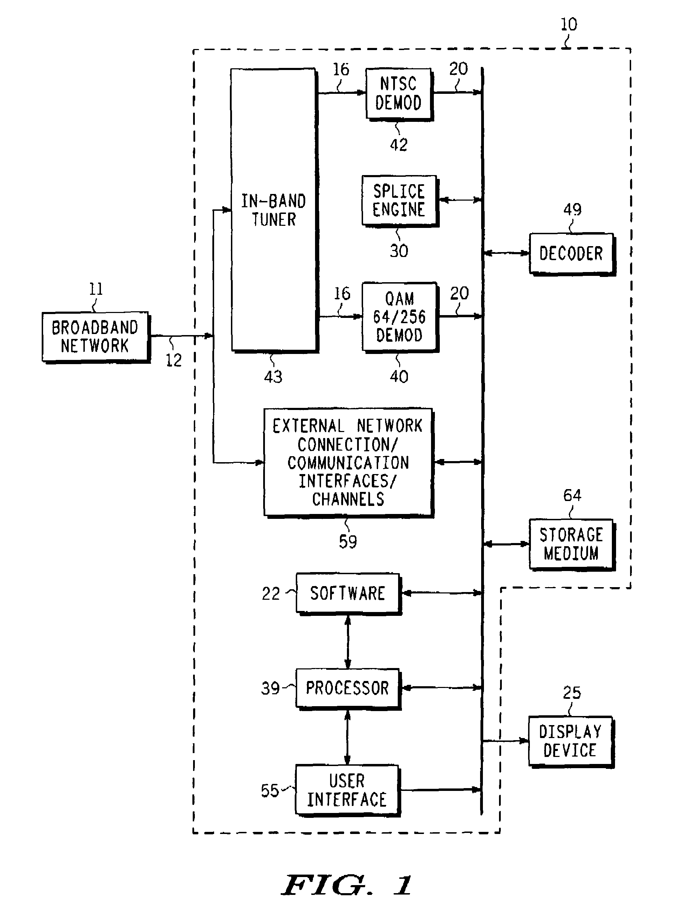

Turning now to the drawings, where like numerals designate like components, FIG. 1 is a block diagram of one example of a DVR system 10 ("system 10"). System 10 receives video signals 12 in which programming content is embodied over a broadband network 11. In one particular example, DVR system 10 is a DVR-enabied cable set-top box, broadband network 11 is a hybrid fiber-optic/coax cable network operated by a cable television operator, and video signal 12 is a multi-channel analog and/or digital programming source broadcast by the cable operator. DVR system 10, however, may be any device or combination of devices capable of receiving, recording and playing back video signal 12; broadband network 11 may be any public or private, wired or wireless, video transmission infrastructure or technology, including but not limited to a fiber-optic network, a coaxial cable network, a hybrid network, a satellite network, cellular network, the Internet, a television network, a radio network, a copper wire network, or any other existing or future transmission infrastructure or technology, operated by any type of program provider, such as a television network or station, a studio, an Internet broadcaster or service provider, a cable operator, or a satellite operator; and video signal 12 may be any pre-recorded or live analog or digital electronic signal representing an image, audio and/or data, in any format.

DVR system 10 includes external network connection/communication interfaces 59, which support devices such as modems, streaming media players and other network connection support devices and/or software, coupled through local or wide area networks (not shown) to program providers and providers of other content, such as advertising content. DVR system 10 further includes an in-band tuner 43, which tunes to a channel signal 16 selected by a viewer via user interface 55. User interface 55 may be any type of known or future device or technology allowing the consumer to select channels or programs the consumer wishes to receive, such as a remote control, mouse, microphone, keyboard, or touch-screen display associated with a personal video recorder.

Channel signal 16 includes video and/or audio components Demodulators 40 and 42 are responsive to in-band tuner 43. Demodulator 40, which may be a 64/256 quadrature amplitude modulation demodulator, for example, is responsive to receive a digital version of channel signal 16. Demodulator 40 identifies digital data packets from one or more digital sources, such as a Moving Pictures Experts' Group (MPEG) transport stream, a high-definition television stream, or a media stream from an external network connection 59, such as a cable modem, using well-known methods and techniques. Demodulator 42, which may be an NTSC demodulator, for example, is responsive to receive an analog version of channel signal 16 and to decode signals and markers according to well-known methods and techniques. Demodulators 40 and 42 are operative to output video information 20.

Video information 20 includes raw video or audio data, arranged for formatting in accordance with a predetermined media format. Video information 20 is preferably arranged in accordance with an MPEG media format, such as the MPEG-2 media format, but may be arranged in accordance with other media formats, including but not limited to other MPEG formats, Hypertext Markup Language (HTML), Virtual Hypertext Markup Language (VHTML), X markup language (XML), H.261, or H.263 formats.

Storage medium 64 is responsive to receive, among other things, encoded video signal 20 for storage. Storage medium 64 may be any local or remote device, now known or later developed, capable of recording data, including but not limited to a hard disk drive, a videocassette recorder tape, all types of optical storage media such as compact disks and digital videodisks, a magnetic tape, a home router, or a server.

Decoder 49 is responsive to receive recorded encoded video signal 20 from storage medium 64, and to play back recorded encoded video signal 20 via display device 25, in response to instructions from user interface 55. Decoder 49 is also responsive to receive and pass through video programming directly from tuner 43. Internal arrangements of decoder 49 are well known-decoder 49 may include analog-to-digital converters, one or more storage media and/or buffers, and general or special-purpose processors or application-specific integrated circuits, along with demultiplexors for demultiplexing and/or synchronizing at least two transport streams, for example, video and audio. Video and audio decoders and/or analog and digital decoders may be separate, with communication between separate decoders allowing for synchronization, error correction and control.

Display device 25, which also includes speakers for outputting audio signals, displays video programming received from tuner 43 or storage medium 64. Display device 25 is responsive to receive analog or digital signals, including but not limited to S-video, composite audio-video, SPDLF, and DVI.

Processor 39 and software 22 are illustrated functionally, and are responsive to various elements of DVR system 10, including demodulators 40 and 42, storage medium 64 and decoder 49. When loaded into a processor, such as processor 39, software 22 is operative to control encoding, recording and playback of encoded video signal 20. It will be appreciated, however, that aspects of the DVR system are out limited to any specific embodiments of computer software or signal processing methods. For example, one or more processors packaged together or with other elements of DVR system 10 may implement functions of processor 39 in a variety of ways. It will also be appreciated that software 22 may be any stored instructions, in one or more parts (stored, for example, on storage medium 64, or another internal or external storage medium such as a read-only-memory or a random-access memory) electronically controlling functions provided by DVR system 10, including firmware, and may be used or implemented by one or more elements, including one or more processors, of DVR system 10.

During normal operation of the DVR system 10, a viewer using user interface 55 selects a particular program to he recorded from video source 11 and/or selects a recorded program for playback from storage medium 64. When a program is to be recorded, an encoded video signal 20 associated with the selected program is transferred to storage medium 64. Likewise, when a program is to be played back, an encoded video signal 20 associated with the selected program is transferred from storage medium 64 to decoder 49 for processing. Decoder 49 demultiplexes and decodes encoded video signal 20 for presentation to the consumer via display device 25.

As previously mentioned, in addition to a standard mode of operation, a video rendering device such as the previously described DVR system 10 can also operate in a number of "trick play" modes. In one trick play mode of operation, DVR system 10 can, via user interface 55, fast-forward a program being played back. For instance, a user interface such as a remote control may have a dedicated key or button that fast-forwards through the currently playing program at one or more frame rates that are higher than the normal presentation frame rate. For instance, the fast-forward button on the; remote control of a conventional DVR is often preprogrammed to fast-forward through a program at 4, 16, or 30 times the normal frame rate, depending on how many times the fast-forward button is depressed.

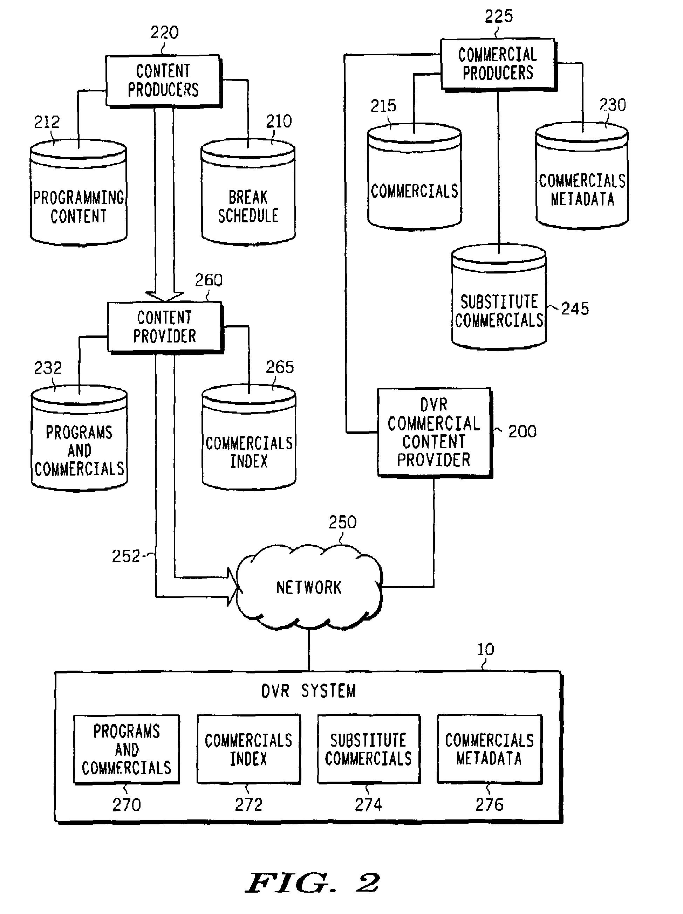

Since commercials are generally designed to be played at the same normal presentation rate as the primary programming content, when the viewer fast-forwards through a commercial, the message or information to be conveyed by the commercial may be partially or completely lost on the viewer. To overcome this problem, whenever a viewer fast-furwardirtg through a program comes upon a commercial, DVR system 10 can replace the commercial with a substitute commercial that is designed to be viewed at the faster frame rate. For example, if thc viewer is fast-forwarding through a program at 4 times the normal presentation rate, the substitute commercial, which may have been recorded at a slow motion rate one quarter of its normal rate, will appear to he at normal speed to a viewer when it is rendered at 4 times the presentation rate. In this way a 60 second commercial, for instance, is replaced with a commercial that the viewer perceives as a normal 15 second commercial. Such a result can be achieved by proper coordination among the DVR system, the content provider (e.g., a CATV network operator), the commercial provider and perhaps a DVR commerical content provider and the content producer. One example of the manner in which these various entities may cooperate with one another is depicted in FIG. 2.

FIG. 2 is a system diagram showing the flow ofprogramming content and other information between a content provider 260, a DVR commerical content provider 200, a commercial provider 225 and the DVR system 10. In some cases the content provider 260, who may be, for example, an MSO, may be the same as the DVR commerical content provider 200. However, for generality they are depicted in FIG. 2 as separate entities.

The content producers 220 supply the programming content 212 to the content provider 260, who in turn makes the programming content available to the DVR system 10 over a broadband network (e.g., network 11 shown in FIG. 1) such as a CATV network or the like, which is represented in FIG. 2 by broadband connection 252. The content producer 220 may also create a schedule of breaks 210 that arc provided in the programming content. The break schedule 210 includes time stamps identifying the beginning and end time of each intermission (if any) that the content Producer builds into the program. While in FIG. 2 the break schedule 210 is prepared by the content producer 220, it alternatively may he prepared by, or supplemented by, a different entity such as the content provider 260. In any case, the break schedule 210 for each program is provided to the content provider 260 as metadata along with the programming content.

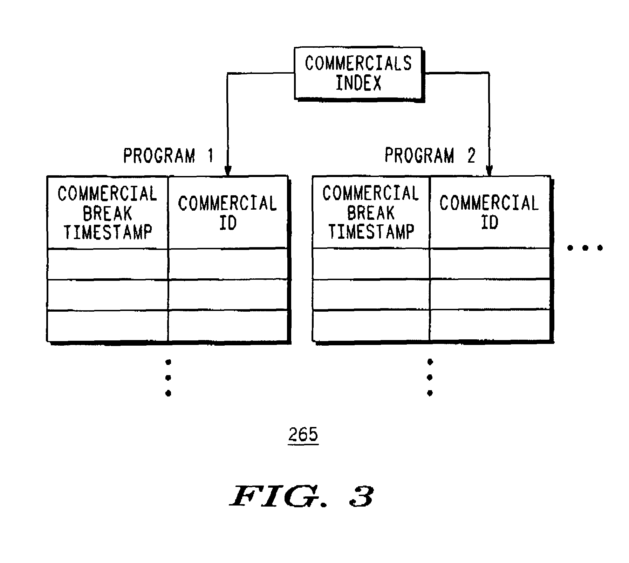

Advertisers or other commercial producers 225 supply commercials 215 to the content provider 260 and the corresponding substitute commercials 245 to the DVR commerical content provider 200. The commercial producers 225 also provide commercial metadata 230 to both the content provider 260 and the DVR commerical content provider 200. Among other information that may be included, the commercial metadata 230 includes a commercial identifier for each commercial that is being supplied. The content provider 260 packages the commercials with the programming content 232 before making it available to the DVR system 10. The content provider 260 also creates a commercials index 265 that is sent as metadata along with the content to the DVR system 10. As shown in FIG. 3, the commercials index 265 includes, for each program that is downloaded, the time stamp for each commercial break and the commercial identifier of the commercial that is inserted at that break.

DVR commercial content provider 200 is in communication with the DVR system 10 over a communications network 250 such as the Internet, a public switched telephone network (PSTN), a wide area network (WAN), or the like. Depending on the relationship between the DVR commercial content provider 200 and the content provider 260, such communication may be established using the same broadband network over which the programming content is sent to the DVR system 10. That is, in FIG. 2 DVR commercial content provider 200 may communicate with the DVR system 10 over network 250, broadband connection 252 or a combination of both. Regardless of the network that is employed, DVR system 10 supplies DVR commercial content provider 200 with the commercial identifiers of the commercials located in the commercial index 265 of each program that the DVR system 10 has downloaded. In response, DVR commercial content provider locates any available substitute commercials that correspond to each identifier and, if available, downloads the substitute commercials to the DVR system 10.

FIG. 2 also shows the programming content 270, the commercials index 272, the substitute commercials 272 and the commercials metadata 276 after they have been downloaded to the DVR system 10. These files generally will reside on the storage medium 64 shown in FIG. 1. As shown, the substitute commercials 274 may be located in their own file or folder until they are needed. When a viewer fast forwards through a stored program, the DVR system 10 retrieves and renders the appropriate substitute commercial instead of the original commercial that would otherwise he rendered. One illustrative example of how this may be accomplished will be detailed below. Of course, the substitute commercial may be retrieved and rendered in place of another commercial in any manner available to one of ordinary skill in the art.

The subject matter (e.g., the product or service being advertised) of the substitute commercial may or may not be the same as the subject matter of the original commercial which it is replacing. In some cases the original commercial may be replaced with a rolling text message or a logo that would be easily legible at the higher playback rates. In other cases the original commercial may be replaced with another commercial that has movement, but which appears to be being rendered at the normal presentation rate when it is actually rendered at a faster rate. Since most DVR systems can generally fast-forward through a program at more than one speed, there may be multiple renditions of the substitute commercial each suitable for a different one of the fast forward presentation rates.

DVR commercial content provider 200 often has personal and/or demographic information available concerning individual viewers. For example, the DVR commercial content provider 200 may know the viewer's program preferences (e.g., science fiction, police dramas) and, possibly, the viewer's personal information (e.g., male, age 27, likes photography). This information can be used to select substitute commercials that arc tailorcd to the individual viewer or the viewer's demographic group, thereby increasing the value of the commercials. This allows the DVR commercial content provider 200 to charge advertisers for targeted advertising, which can be much more valuable than shotgun advertising that occurs with normal broadcast commercials, In general, the substitute commercials may be selected by the DVR commercial content provider 200, the commercial producers 225, or both parties in coordination with one another. The substitute commercials may be periodically replaced with updated commercials so that they do not become outdated. Moreover, if a recorded program is rendered more than once, different substitute commercials may be used each time the program is subsequently viewed.

The communication between the DVR commercial content provider 200 and the DVR system 10 may be accomplished in either a push or pull manner. In a typical client/server environment involving a pull, the client engages a server with a request for service or information. The server responds to the request and returns information to the client. This interaction is referred to as a pull, since the client is effectively pulling information from the server. In the present case, the DVR system 10 (acting as the client) may request that the substitute commercials be forwarded to it by the DVR commercial content provider 200. The pull can be initiated or activated by any number of events. For example, a pull interaction may be initiated at the time a program is being recorded or when the viewer is watching a program and fast forwards through it. In a push interaction, the server transmits information to the client without explicit instruction from the client to do so. This interaction is referred to as a push, since the server is effectively pushing information to the client. In the present case, the substitute commercials may be automatically transmitted to the DVR system 10 using a push interaction initiated by the DVR commercial content provider 200.

In either a push or pull interaction, the substitute commercials may be forwarded from the DVR commercial content provider 200 to the DVR system 10 at regular intervals (e.g., hourly, daily, etc). In addition, or as an alternative thereto, the substitute commercials may be forwarded at other times using a pull interaction, such as whenever a program is downloaded to the DVR system 10 from the content provider 260. That is, the program, including commercials, as well as the substitute commercials, may all he downloaded contemporaneously.

As previously mentioned, when a viewer is watching a program recorded on the DVR system 10 and is fast-forwarding through a commercial, the commercial is replaced with a substitute commercial (if available) that is more suitably rendered at the faster frame rate. In order to accomplish this substitution the DVR system 10 includes a splice engine 30 (see FIG. 1) to replace the original commercials with the substitute commercials. As with the other functional elements shown in FIG. 1, splice engine 30 may be embodied in software, hardware, or any combination thereof. Since the programs and commercials are typically digitally encoded data streams (e.g., MPEG-2 data streams), splice engine 30 should preferably be configured to support digitally encoded data stream splicing without converting the data stream to the analog domain. The splice engine 30 can implement any of a variety of different techniques for replacing the commercials which arc known to those of ordinary skill in the art.

In the context of MPFG-2, a continuous video stream is encoded as a series of sequences. Each sequence is divided into groups of pictures ("GOFs") and each GOP contains a series of encoded video frames. Each sequence includes a sequence header, each GOP includes a GOP header and each frame includes a frame header. Each sequence also includes at least 10 program clock references or "PCRs". In addition, each data stream is transmitted as a contiguous series of packets, with each packet having a packet header. Each MPEG-2 encoded video frame further includes, in addition to video data and a frame type field (i.e., an I, B or P frame), timing and relative ordering information. The frame timing information includes (for each frame) a decode time stamp or "DTS" field, (which indicates the time at which a received frame will be decoded), and a corresponding presentation time stamp or "PTS" field (which indicates the time at which the decoded frame will be presented for display). While the time stamps located in the commercials index 265 which are used by the splice engine 30 may correspond to any appropriate ones of the various PCRs, the PTS will often be the suitable choice.

Another illustrative splicing technique in the context of MPEG-2 that does not employ the PCRs has been proposed by the Society of Motion Pictures and Television ("Proposed SMPTE Standard for Points for MPEG-2 Transport Streams"), which suggests a new extension to the MPEG-2 specifications to facilitate splicing by incorporation of splice points and related splicing-support information directly into the data stream at the time of encoding. These or any other techniques may be employed by the splice engine to splice substitute commercials into the digitally encoded data stream of the recorded programs.

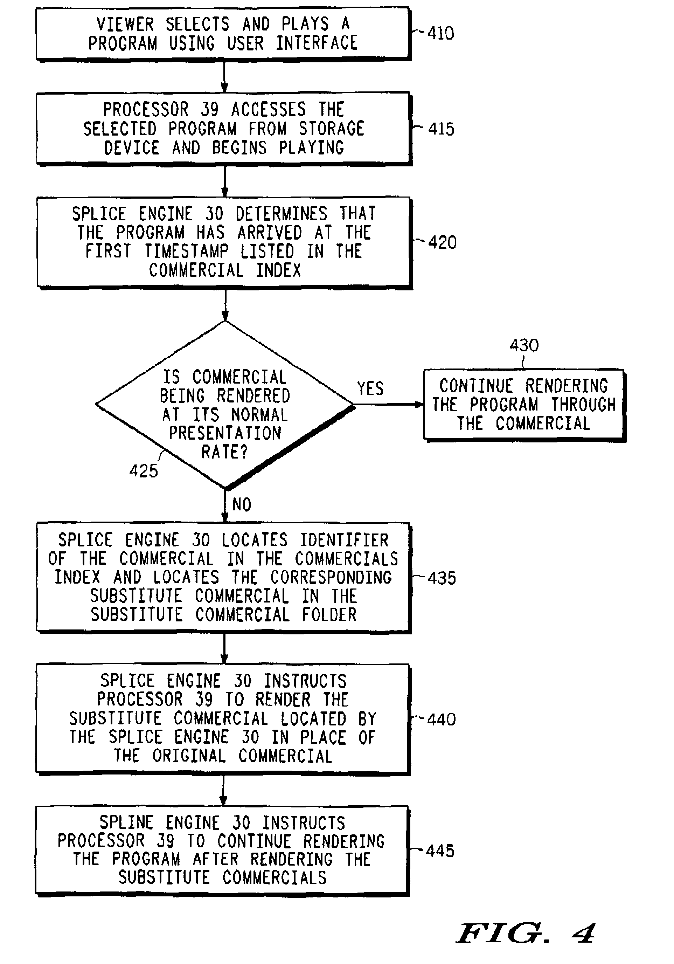

FIG. 4 is a flowchart illustrating one process by which the DVR system renders a program using the substitute commercials described above. In step 410 the viewer selects and plays a program the using user interface. In response, the processor 39 accesses the selected program from the storage device and begins playing it in step 415. In step 420 the splice engine 30 monitors the program as it is rendered and determines when the program has arrived at the first timestamp listed in the commercial index. At decision step 425 the processor 39 determines if the commercial is being rendered at its normal presentation rate when the program arrives at the first timestamp. If the program is being rendered at its normal presentation rate, in step 430 the program continues to be rendered with the commercial included in the program. On the other hand, if the program is being fast forwarded when it arrives at the first timestamp in step 435 the splice engine 30 locates the identifier of the commercial in the commercials index and locates the corresponding substitute commercial in the substitute commercials folder. In step 440 the splice engine 30 instructs the processor 39 to render the substitute commercial located by the splice engine 30 in place of the original commercial. The splice engine 30 instructs the processor 39 in step 445 to continue rendering the program after the substitute commercial or commercials have been rendered (i.e., at the time stamp corresponding to the end of the commercial break).

Although a specific architecture has been described herein, including specific functional elements and relationships, it is contemplated that the systems and methods herein may be implemented in a variety of ways. For example, functional elements may be packaged together or individually, or may be implemented by fewer, more or different devices, and may be either integrated within other products, or adapted to work with other products externally. When one element is indicated as being responsive to another element, the elements may be directly or indirectly coupled.

The process shown in FIG.4 may be implemented in a general, multi-purpose or single purpose processor. Such a processor will execute instructions, either at the assembly, compiled or machine-level, to perform that process. Those instructions can be written by one of ordinary skill in the art following the description of FIG. 4 and stored or transmitted on a computer readable medium. The instructions may also be created using source code or any other known computer-aided design tool. A computer readable medium may be any medium capable of carrying those instructions and include a CD-ROM, DVD, magnetic or other optical disc, tape, silicon memory (e.g., removable, non-removable, volatile or non-volatile), packetized or non-packetized wireline or wireless transmission signals.

It will furthermore be apparent that other and further forms of the invention, and embodiments other than the specific embodiments described above, may be devised without departing from the spirit and scope of the appended claims and their equivalents, and it is therefore intended that the scope of this invention will only be governed by the following claims and their equivalents.

## Claims

1. An apparatus for rendering a video program, comprising:
a computer-readable storage medium; and
a processor responsive to the computer-readable storage medium and to a software program, the software program, when loaded into the processor, operative to:
receive a user command specifying a fast forward operation through a program;
identify a first commercial associated with a commercial break in the program while fast forwarding therethrough;
select a substitute commercial that appears to be rendered at the normal presentation rate while fast forwarding through the program; and
play the substitute commercial.

2. The apparatus of claim 1 wherein the software program is further operative to receive the substitute commercial over a communications network.

3. The apparatus of claim 1 wherein the software program is further operative to store the substitute commercial on the computer-readable storage medium.

4. The apparatus of claim 1 wherein the software is further operative to forward a request over a communications network to a third party to receive the substitute commercial.
